# FASCICULE DE BREVET EUROPEEN

(11) **EP 3 482 664 B1**
(45) Date de publication et mention de la délivrance du brevet: **18.03.2020**
(21) Numéro de dépôt: 18205525.1
(22) Date de dépôt: 09.11.2018
(51) Int. Cl.: A47J 43/26

(54) **DISPOSITIF CASSE-NOIX**
NUSSKNACKERVORRICHTUNG
NUTCRACKER DEVICE

(30) Priorité: 13.11.2017 FR 1771200
(43) Date de publication de la demande: 15.05.2019
(73) Titulaire: Sigaud, Philippe, 33119 St Theoffrey (FR)
(72) Inventeur: Sigaud, Philippe, 33119 St Theoffrey (FR)
(74) Mandataire: Nicolle, Olivier

(56) Documents cités:
- WO-A1-2007/113348
- DE-A1- 3 244 136
- US-A- 1 254 119

## Description

### Domaine de l'invention

La présente invention concerne un dispositif casse-noix, en particulier un dispositif pour casser des coques de fruits et analogues; plus particulièrement, mais pas exclusivement, un dispositif pour casser des coques de noix sans endommager le cerneau de la noix.

### Arrière-plan technologique

Dans de nombreuses sociétés, l'engouement croissant pour les aliments et les progrès technologiques ont conduit à la banalisation des aliments pré-emballés.

Cependant, beaucoup de personnes préfèrent les aliments frais et les rituels d'ouverture et de préparation de denrées alimentaires fraîches.

En particulier, les fruits à coque, tels que les noix, peuvent être délicieux et le rituel d'ouverture des noix pour en obtenir leur cerneau peut s'avérer particulièrement plaisant pour beaucoup de personnes.

Cependant, les casse-noix classiques posent souvent des problèmes lors de leur utilisation, par exemple (et en référence particulière aux noix), il peut arriver de briser le cerneau de la noix en même temps que sa coque, alors que l'utilisateur ne veut seulement casser la coque.

### État de la technique antérieure

Le document US 4 787 307 (ROLLBAND) décrit un casse-noix, monté sur une base, enserrant un fruit à coque à casser entre un piston mobile et une enclume réglable. L'utilisateur définit initialement la distance de cassage optimale en alignant un marqueur d'indice situé sur le piston et en ajustant l'enclume pour maintenir fermement l'extrémité opposée du fruit à coque. Par la suite, l'utilisateur n'a besoin que de déplacer la poignée du levier vers sa position haute et insérer le fruit à coque. Aucun ajustement supplémentaire de l'enclume n'est nécessaire pour des fruits à coque de taille similaire. L'utilisateur déplace alors le piston d'une distance limitée en activant la poignée de levier reliée au piston par un joint à genouillère ou par une autre configuration de mouvement limité.

Le document DE 3 244 136 (ROMMEL et al.) décrit un outil de préhension avec une ouverture de mâchoire réglable, comportant deux mâchoires, dont l'une est déplaçable, en tant que mâchoire de serrage, sur un rail de support et peut être verrouillée par un moyen de verrouillage réglable, Le moyen de verrouillage est indépendant de la mâchoire de serrage et, entre cette dernière et le moyen de verrouillage, un membre à ressort est configuré pour induire, après relâchement de l'outil de préhension, le retour de la mâchoire de serrage à la position de départ réglée par les moyens de verrouillage.

Le document DE 3 139 052 (GOLDIN) décrit un dispositif pour casser des fruits secs à coque ou similaires, qui comprend deux leviers qui peuvent être actionnés à la manière de pinces et sont conçus d'une part comme une poignée et d'autre part comme surface de serrage. Afin d'obtenir un effet levier optimal, pour des fruits à coque de différentes tailles et avec une manipulation simple, il est prévu une pièce de raccordement disposée entre les leviers, dans laquelle la pièce de raccordement est montée de manière pivotante sur un levier. La pièce de raccordement peut être déplacée sur l'autre levier à l'encontre de l'effet d'un ressort de compression. Dans ce dispositif, le fruit à coque à casser est placé entre les surfaces de serrage qui sont formées par les extrémités courbées des deux leviers.

Les documents US 1254119 et WO 2007113348 décrivent également des dispositifs pour casser des coques de fruits.

La nécessité de surmonter les problèmes rencontrés sur les dispositifs existants a conduit à la présente invention.

### Résumé de l'invention

La présente invention a pour objet un dispositif casse-noix selon la revendication 1.

Un tel dispositif casse-noix conforme à l'invention est facile à manier, ergonomique, d'usage sûr et revient à sa position initiale ouverte après usage sans causer de dommage à l'utilisateur.

Il peut être envisagé que le dispositif de la présente invention permette à un utilisateur de positionner une noix dans le sens de la longueur, parallèlement au bras, entre les mâchoires, et serrer le levier de manière à casser ou fendre la coque de noix sans endommager le cerneau.

Dans un mode de réalisation de 'invention, le mécanisme d'entraînement comprend une roue d'engrenage dentée , la roue d'engrenage dentée pouvant être rappelée par ressort pour revenir en position d'origine.

Selon un autre mode de réalisation conforme à l'invention, le bras et le membre de la première mâchoire comprennent un moyen de blocage de type arc-boutement.

Selon encore un autre mode de réalisation, la première mâchoire peut être rappelée par ressort pour revenir en position d'origine.

Le levier peut être à ressort. De cette manière, le levier et la deuxième mâchoire peuvent revenir en position initiale, espacés de la première mâchoire, après compression. De plus, ou alternativement, les mâchoires sont maintenues ensemble sur la coque du fruit avant que celle-ci ne soit cassée, et un mouvement rapide de l'une vers l'autre provoque la brisure de la coque.

Dans certains modes de réalisation, la deuxième mâchoire peut avoir un déplacement limité. De cette façon, il peut être envisagé que la coque du fruit soit comprimée et se casse sans endommager le fruit à l'intérieur.

Par exemple, la première mâchoire peut être glissée le long du bras de manière à délimiter la longueur totale du fruit à coque, où le levier est serré vers la première mâchoire de sorte que les mâchoires définissent un espace plus petit que la longueur totale du fruit à coque.

Le levier peut être raccordé à la seconde mâchoire par l'intermédiaire d'un mécanisme d'engrenage, lequel mécanisme peut comporter une crémaillère et un pignon dans certains modes de réalisation, par exemple dans d'autres modes de réalisation comprenant un mécanisme d'engrenage conique ou un mécanisme d'engrenage à roue et vis sans fin, de manière à traduire le mouvement rotatif du pivot du levier autour de l'engrenage en un mouvement linéaire de la seconde mâchoire, de sorte que la seconde mâchoire se déplace vers la première mâchoire à une distance proche.

Un ressort peut alors agir pour tourner le mécanisme d'engrenage en sens inverse, ou relâcher le levier, en position d'origine, inversant ainsi le déplacement de la deuxième mâchoire.

Dans certains modes de réalisation, la première mâchoire peut être pourvue d'un moyen de blocage sur le bras, par exemple un système de dent de came entre la première mâchoire et le bras. De cette façon, la première mâchoire peut être agencée pour se déplacer facilement le long du bras, mais se bloquer lorsque la deuxième mâchoire pousse contre la première mâchoire, par exemple lorsqu'un un fruit à coque est entre les mâchoires et que la première mâchoire est repoussée de manière inégale par la deuxième mâchoire de façon à être décalée par rapport à l'axe perpendiculaire.

Dans certains modes de réalisation, le dispositif comprend un moyen de blocage de type arc-boutement, dans lequel le moyen de blocage est activé et verrouillé par un mécanisme à arc-boutement. De cette façon, la première mâchoire peut être déplacée au-delà du fruit à coque, revenir en place et rester en place afin d'appliquer une pression sur un fruit à coque en déplaçant la seconde mâchoire. De cette façon, la deuxième mâchoire peut être déplacée de façon répétée par le mécanisme. Ceci peut permettre une utilisation rapide du dispositif sur plusieurs fruits à coque à la suite.

Dans certains modes de réalisation, le moyen de blocage peut comprendre un bras strié afin de permettre le verrouillage comme une pince.

La première mâchoire peut comporter des roulements dans ou au niveau de la perforation, de sorte que le bras se déplace librement dans la perforation, et le membre de la première mâchoire se déplace librement sur le bras. Dans certains autres modes de réalisation, les roulements peuvent comprendre un mécanisme de verrouillage ou d'encliquetage dans un sens de déplacement.

De tels roulements peuvent être souples ou comprendre un ou des ressort(s) de manière à permettre un retour de la première mâchoire.

Un mode de réalisation préféré de l'invention va maintenant être décrit à titre d'exemple uniquement et en référence aux Figures dans lesquelles :

### Brève description des figures

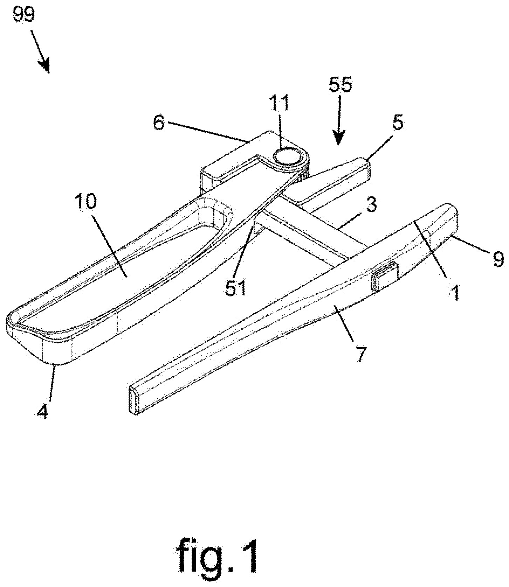

Figure 1 représente une vue isométrique d'un premier mode de réalisation du dispositif selon la présente invention ;

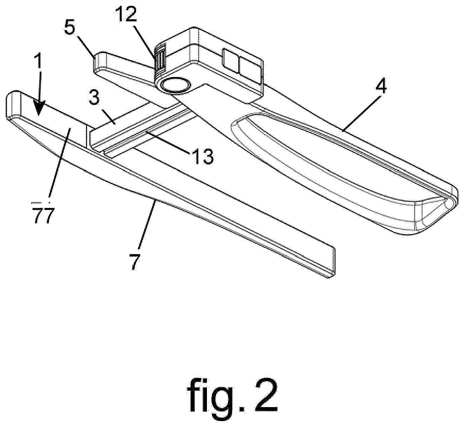

Figure 2 représente une vue isométrique inversée du mode de réalisation représenté dans la Figure 1 ;

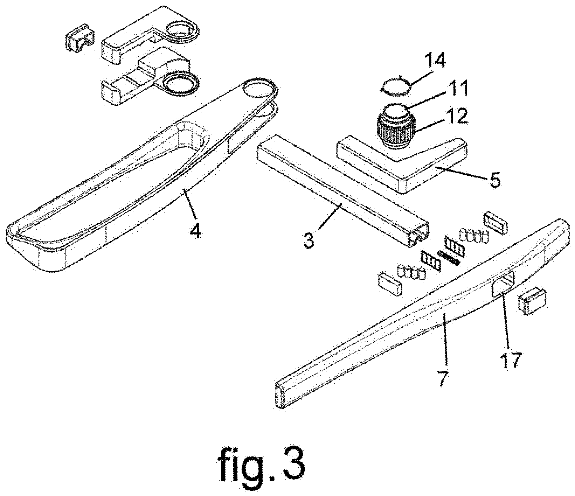

Figure 3 représente une vue isométrique explosée du mode de réalisation représenté dans la Figure 1 ; et

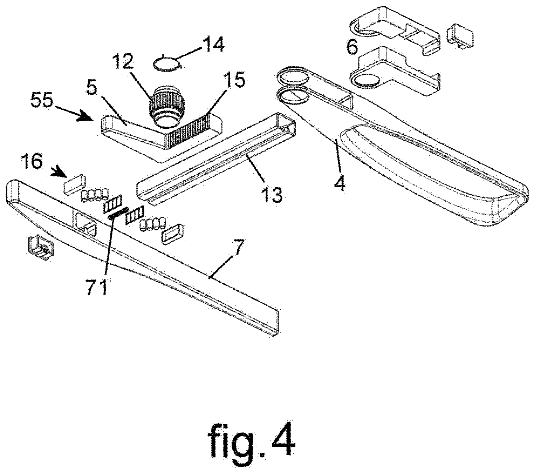

Figure 4 représente une vue isométrique inversée explosée du mode de réalisation représenté dans la Figure 1.

### Description détaillée des Figures

En référence aux figures, il est représenté un mode de réalisation du dispositif 99 comprenant une première mâchoire 1 et une seconde mâchoire 55, les mâchoires espacées et configurées pour se déplacer conjointement afin de comprimer un fruit à coque (non représenté) entre elles, la première mâchoire 1 configurée pour glisser sur un bras 3 afin de modifier l'espacement des mâchoires, la seconde mâchoire 55 configurée pour être entraînée le long du bras 3 vers la première mâchoire 1 par un mécanisme d'entraînement 11 ; et un levier 4 ; le levier 4 configuré pour faire fonctionner le mécanisme d'entraînement 11 et entraîner la seconde mâchoire 55 le long du bras 3 vers la première mâchoire 1 ; la première mâchoire 1 tenue par un utilisateur lorsque le levier 4 est serré.

On entend ici par fruit à coque tout objet cassable appartenant au groupe formé par noix, noisette, amende, crustacé, et analogue.

Dans le mode de réalisation illustré dans les figures, la première mâchoire 1 comprend un membre allongé 7 avec une perforation intermédiaire 17 pour recevoir le bras 3, ayant une extrémité courte 9 d'un côté du bras 3 et une section plus longue sur le côté opposé de la perforation 17 et du bras 3, où la surface interne 77 de l'extrémité courte 9 comprends la surface de la première mâchoire en usage.

La seconde mâchoire 55 comprend une partie en forme de L et est fixée au levier 4 par l'intermédiaire d'un mécanisme d'entraînement à engrenage 11, de sorte que lorsque le levier 4 est serré, l'engrenage 11 tourne, en déplaçant la seconde mâchoire 5 le long d'une glissière 13 dans le bras 3 en forme de U dans la section, cassant la coque d'un fruit entre les mâchoires. La seconde mâchoire comprend une partie en forme de L avec un bras de pignon 15 parallèle au bras 3 et se déplaçant par contact avec les dents de l'engrenage 12, et un bras 5 formant la seconde mâchoire arrangé orthogonalement au bras de pignon 15, parallèle au membre allongé 7 de la première mâchoire 1. De cette façon, le mécanisme comprend une roue d'engrenage dentée 12 maintenue dans un boîtier 6, lequel boîtier permet au pignon denté 15 correspondant, s'étendant orthogonalement sur la seconde mâchoire 55, d'être maintenu en contact avec la roue 12. La roue 12 est tournée par le mouvement de pivotement du levier et le pignon 15 et la seconde mâchoire 55 sont entraînés et déplacés, respectivement, hors du boîtier lorsque le levier est serré. Le membre 7 de la première mâchoire 1 est relié au bras 3 avec un ensemble de roulements 16 qui lui permettent de se déplacer librement, de sorte que, si nécessaire, le membre 7 de la première mâchoire peut être déplacé le long du bras 3 pour comprimer fermement le fruit à coque en s'adaptant à la taille du fruit à coque. Le membre 7 de la première mâchoire revient dans sa position d'origine grâce à un ressort 71.

En usage, le membre 7 de la première mâchoire est déplacé puis maintenu en position par l'utilisateur, sans compression, il est envisagé que l'utilisateur positionne le talon de sa main contre la face extérieure du membre 7 et ses doigts dans un trou 10 du levier 4. Le levier 4 et le premier membre de la mâchoire 1 ont des surfaces arrondies et lisses, de sorte qu'elles permettent une préhension confortable, même en exerçant une forte pression. Le levier 4 peut être fabriqué à partir d'une variété de matériaux en fonction du style de l'utilisateur, mais il est prévu d'avoir des bords chanfreinés pour le confort de la main.

Les surfaces internes 77 de l'extrémité courte 9 du membre 7 de la première mâchoire et la deuxième mâchoire 55 sont texturées avec un motif hachuré ou moletées pour 10 s'assurer qu'elles peuvent facilement tenir la coque ou le fruit.

Le levier 4 est limité en déplacement par l'extrémité distale du premier élément de la première mâchoire ou par l'extrémité proximale 51 du levier qui vient en butée contre le bras 3 afin de limiter le déplacement rotatoire et lors de son retour vient en butée 15 contre le boîtier 6.

Le levier retourne à sa position d'origine par l'intermédiaire d'un ressort de torsion 14 situé dans le mécanisme 11 qui agit pour déplacer le levier 4 et la seconde mâchoire 55 sur le bras 3.

Le membre allongé 7 de la première mâchoire est en outre agencé pour revenir à une position d'origine, par l'intermédiaire d'un ressort de compression 71.

De cette manière, le levier 4 est configuré pour ne pouvoir se déplacer que sur une courte distance et se replacer dans sa position d'origine. Dans le mode de réalisation illustré dans les figures, cette distance est de 8 mm, suffisante pour casser la coque du fruit sans casser le fruit contenu à l'intérieur.

Le membre de la première mâchoire, le levier, l'engrenage et les ressorts sont 30 fabriqués en métal pour assurer la durabilité du dispositif.

En usage : Le fruit à coque est placé entre les mâchoires en glissant la première mâchoire dans une position ajustable à la taille du fruit à coque afin de maintenir le fruit à coque entre les mâchoires, idéalement utilisé avec une noix, positionnée dans le sens de la longueur parallèlement au bras.

L'utilisateur presse légèrement l'extrémité longue de la première mâchoire et le levier afin de maintenir le fruit à coque en position.

Le levier et l'extrémité longue de la première mâchoire sont pressés l'un vers l'autre pour faire tourner le mécanisme d'engrenage et faire avancer la deuxième mâchoire vers la première mâchoire le long du bras, afin de comprimer le fruit à coque dans les mâchoires et casser la coque sans endommager le fruit.

L'extrémité longue de la première mâchoire et le levier sont relâchés et reviennent à leurs positions initiales respectives. Le fruit est prêt à être mangé.

L'invention a été décrite à titre d'exemple uniquement et les modes de réalisation mentionnés ci-dessus peuvent varier sans être exclus du champ de l'invention telle que définie par les revendications, en particulier, mais pas uniquement, une combinaison de caractéristiques des modes de réalisation décrits.

## Revendications

1. Dispositif pour casser des coques de fruits (99) comprenant une première mâchoire (1) et une seconde mâchoire (55), les mâchoires étant espacées et configurées pour se déplacer conjointement afin de comprimer entre elles un fruit à coque, la première mâchoire (1) étant configurée pour glisser sur un bras (3) afin de modifier l'espacement des mâchoires, la seconde mâchoire (55) étant configurée pour être entraînée le long du bras (3) vers la première mâchoire (1) par un mécanisme d'entraînement (11) ; et un levier (4) ; le levier (4) étant configuré pour faire fonctionner le mécanisme d'entraînement (11) et entraîner la seconde mâchoire (55) le long du bras (3) vers la première mâchoire (1) ; la première mâchoire (1) étant tenue par un utilisateur lorsque le levier (4) est serré, comprend un membre de mâchoire allongé (7) avec une perforation intermédiaire (17) pour permettre le passage du bras (3) , ledit dispositif pour casser des coques de fruits étant **caractérisé en ce que** la seconde mâchoire (55) comprend une partie en forme de L avec un bras de pignon (15) parallèle au bras (3) et se déplaçant par le mécanisme d'entraînement (11), et un bras de mâchoire (5) disposé orthogonalement, parallèle au membre (7).

2. Dispositif pour casser des coques de fruits (99) selon la revendication 1, dans lequel le mécanisme d'entraînement (11) comprend une roue d'engrenage dentée (51).

3. Dispositif pour casser des coques de fruits (99) selon la revendication 2, dans lequel la roue d'engrenage dentée (51) est rappelée par ressort pour revenir en position d'origine.

4. Dispositif pour casser des coques de fruits (99) selon l'une quelconque des revendications précédentes, dans lequel le bras (3) et le membre (7) de la première mâchoire (1) comprennent un moyen de blocage de type arc-boutement.

5. Dispositif pour casser des coques de fruits (99) selon l'une quelconque des revendications précédentes, dans lequel la première mâchoire (1) est rappelée par ressort pour revenir en position d'origine.

## Patentansprüche

1. Vorrichtung zum Knacken der Schalen von Schalenfrüchten (99), die eine erste Backe (1) und eine zweite Backe (55) umfasst, wobei die Backen zueinander beabstandet und so gestaltet sind, dass sie sich zusammen bewegen, um eine zwischen ihnen befindliche Schalenfrucht zusammenzudrücken, wobei die erste Backe (1) so gestaltet ist, dass sie auf einem Arm (3) gleitet, um die Beabstandung der Backen zu ändern, und die zweite Backe (55) so gestaltet ist, dass sie durch einen Antriebsmechanismus (11) entlang des Arms (3) zur ersten Backe (1) hin angetrieben wird; und einen Hebel (4), wobei der Hebel (4) so gestaltet ist, dass er den Antriebsmechanismus (11) betätigt und die zweite Backe (55) entlang des Arms (3) zur ersten Backe (1) hin antreibt; wobei die erste Backe (1), die von einem Benutzer gehalten wird, wenn der Hebel (4) betätigt ist, ein längliches Backenelement (7) mit einer Zwischenperforation (17) umfasst, um den Durchgang des Arms (3) zu ermöglichen, wobei die Vorrichtung zum Knacken der Schalen von Schalenobst **dadurch gekennzeichnet ist, dass** die zweite Backe (55) einen L-förmigen Teil mit einem Zahnstangenarm (15) parallel zum Arm (3) umfasst, der sich durch den Antriebsmechanismus (11) bewegt, und einen Backenarm (5), der orthogonal und parallel zum Element (7) angeordnet ist.

2. Vorrichtung zum Knacken der Schalen von Schalenfrüchten (99) nach Anspruch 1, in der der Mechanismus (11) ein gezahntes Getrieberad (51) umfasst.

3. Vorrichtung zum Knacken der Schalen von Schalenfrüchten (99) nach Anspruch 2, wobei das gezahnte Getrieberad (51) durch eine Feder in seine ursprüngliche Position zurück gestellt wird.

4. Vorrichtung zum Knacken der Schalen von Schalenfrüchten (99) nach einem der vorhergehenden Ansprüche, in der der Arm (3) und das Element (7) der ersten Backe (1) ein Blockiermittel vom Typ Selbsthemmung umfassen.

5. Vorrichtung zum Knacken der Schalen von Schalenfrüchten (99) nach einem der vorhergehenden Ansprüche, in die erste Backe (1) durch eine Feder in ihre ursprüngliche Position zurück gestellt wird.

## Claims

1. A device (99) for cracking fruit shells comprising a first jaw (1) and a second jaw (55), the jaws being spaced apart and configured so as to move conjointly in order to compress a shell fruit between them, the first jaw (1) being configured to as to slide on an arm (3) in order to modify the spacing of the jaws, the second jaw (55) being configured so as to be driven along the arm (3) towards the first jaw (1) by a drive mechanism (11); and a lever (4); the lever (4) being configured to operate the drive mechanism (11) and drive the second jaw (55) along the arm (3) towards the first jaw (1); the first jaw (1), being held by a user when the lever (4) is gripped, comprises an elongate jaw member (7) with an intermediate perforation (17) to allow passage of the arm (3), said device for cracking fruit shells being **characterised in that** the second jaw (55) comprises an L-shaped part with a pinion arm (15) parallel to the arm (3) and moving by means of the drive mechanism (11), and a jaw arm (5) disposed orthogonally, parallel to the member (7).

2. A device (99) for cracking fruit shells according to claim 1, wherein the drive mechanism (11) comprises a toothed gearwheel (51).

3. A device (99) for cracking fruit shells according to claim 2, wherein the toothed gearwheel (51) is returned by spring in order to return to its original position.

4. A device (99) for cracking fruit shells according to any of the preceding claims, wherein the arm (3) and the member (7) of the first jaw (1) comprise a locking means of the buttress type.

5. A device (99) for cracking fruit shells according to any of the preceding claims, wherein the first jaw (1) is returned by spring in order to return to its original position.
